# EUROPEAN PATENT SPECIFICATION

(11) **EP 2 408 631 B1**
(45) Date of publication and mention of the grant of the patent: **16.10.2013**
(21) Application number: 10753898.5
(22) Date of filing: 10.03.2010
(51) Int. Cl.: B60C 23/02, B60C 23/00, G01B 7/004, B60C 23/04

(54) **METHOD AND APPARATUS FOR DETERMINING TIRE POSITION ON A VEHICLE**
VERFAHREN UND VORRICHTUNG ZUR BESTIMMUNG DER POSITION EINES FAHRZEUGS
PROCÉDÉ ET APPAREIL POUR DÉTERMINER LA POSITION D'UN PNEU SUR UN VÉHICULE

(30) Priority: 16.03.2009 US 404591
(43) Date of publication of application: 25.01.2012
(73) Proprietor: TRW Automotive U.S. LLC, Farmington Hills, MI 48335 (US); MICHELIN Recherche et Technique S.A., 1763 Granges-Paccot (CH); Société de Technologie MICHELIN, 63000 Clermont-Ferrand (FR)
(72) Inventor: BORTOLIN, Dino, Ontario, N9H 1L9 (CA)
(74) Representative: Wagner, Karl H.
(86) International application number: PCT/US2010/026774
(87) International publication number: WO 2010/107641

(56) References cited:
- JP-A- 2008 273 477
- US-A- 6 112 587
- US-A1- 2005 109 092
- US-B1- 6 204 758
- US-B1- 6 204 758

## Description

### Field of the Invention

The present invention relates to a method and apparatus for determining a position of a tire on a vehicle and, in particular, a method and apparatus for determining a position of a tire on a vehicle in response to signals from a piezoelectric sensor and a magnetic, sensor.

### Background of the Invention

Tire pressure monitoring systems having an associated tire-based pressure sensor and transmitter in each tire are known. Such a tire-based sensor senses the pressure inside its associated tire, and the tire-based transmitter transmits the sensed pressure information to a vehicle mounted receiver. The vehicle mounted receiver is connected to a display that displays, for example, a warning to the vehicle operator when an under-inflated tire condition occurs.

Each tire-based transmitter has a unique identification code that is transmitted as part of the tire transmission signal. The vehicle-based receiver must associate the identification codes with the tire locations so as to display tire condition information appropriately.

US 2006/0142911 A1 discloses a method and apparatus for locating the position of a wheel on the right or left of a vehicle using signals from two magnetic sensors. US 2006/0044125 A1 discloses a method and apparatus for detecting the right/left position of a wheel on a vehicle using acceleration signals from first and second means capable of measuring acceleration, such as shock sensors incorporating elements made of piezoelectric ceramic.

US 6,204,758 B1 discloses a tire monitor for use in a remote tire monitor system. The tire monitor includes an accelerometer for detecting acceleration of the tire monitor. Position information for the tire monitor is determined in response to the acceleration. In this manner, tire position information is determined automatically to allow the system to display tire characteristic data such as air pressure in conjunction with tire position.

JP 2008/ 273 477 A discloses a vehicle sensor system capable of detecting a state of each tire by a simple configuration and control. An electromagnetic compass of a vehicle detects geomagnetism and calculates azimuth of the vehicle. An initiator transmits signals indicating a sensor start command to wheels by radio. A wheel interior sensor unit mounted on each of the wheels detects a state of the tire, and detects geomagnetism by the electromagnetic compass to calculate azimuth of the wheel. In response to reception of the signals indicating the sensor start command, the wheel interior sensor unit transmits, by radio, a signal including data indicating the tire state (pneumatic pressure, temperature, acceleration) and data indicating the azimuth of the wheel. An ECU receives the signal, identifies the arrangement position of the wheel based on the data on the azimuth of the wheel, and outputs the state of the tire of the wheel to an indicator based on the data indicating the tire state.

### Summary of the invention

The present invention is directed to a method and apparatus for determining a position of a tire on a vehicle and, in particular, a method and apparatus for determining a position of a tire on a vehicle in response to signals from a piezoelectric sensor and a magnetic sensor.

In accordance with the present invention, an apparatus for determining a position of a tire on a vehicle is provided as set forth in claim 1.

In accordance with another embodiment of the present invention, a method for determining a position of a tire on a vehicle is provided as set forth in claim 11.

Preferred embodiments of the present invention may be gathered from the dependent claims.

### Brief Description of the Drawings

The foregoing and other features and advantages of the present invention will become apparent to one skilled in the art upon consideration of the following description of the invention and the accompanying drawings, in which:
Fig. 1 is a schematic view of a vehicle tire having an apparatus in accordance with an example embodiment of the present invention;
Fig. 2 is a schematic illustration of a portion of the apparatus of Fig. 1;
Fig. 3 is a functional block diagram of a portion of the apparatus of Fig. 1;
Figs. 4A and 4B are diagrams schematically illustrating the operation of and output from a piezoelectric sensor of the apparatus of Fig. 1;
Figs. 5A and 5B are diagrams schematically illustrating the operation of and output from a magnetic sensor of the apparatus of Fig. 1;
Fig. 6 is a graph schematically illustrating the combined outputs from the sensors of Figs. 4 and 5;
Fig. 7 is a diagram schematically illustrating the operation of and output from the magnetic sensor of the apparatus of Fig. 1 when mounted on different sides of a vehicle;
Figs. 8A and 8B are diagrams schematically the operation of and outputs from a piezoelectric sensor and a magnetic sensor of an apparatus in accordance with another example embodiment of the present invention; and
Fig. 9 is a flow chart showing a process used by the apparatus of Fig. 1 in accordance with an example embodiment of the present invention.

### Detailed Description

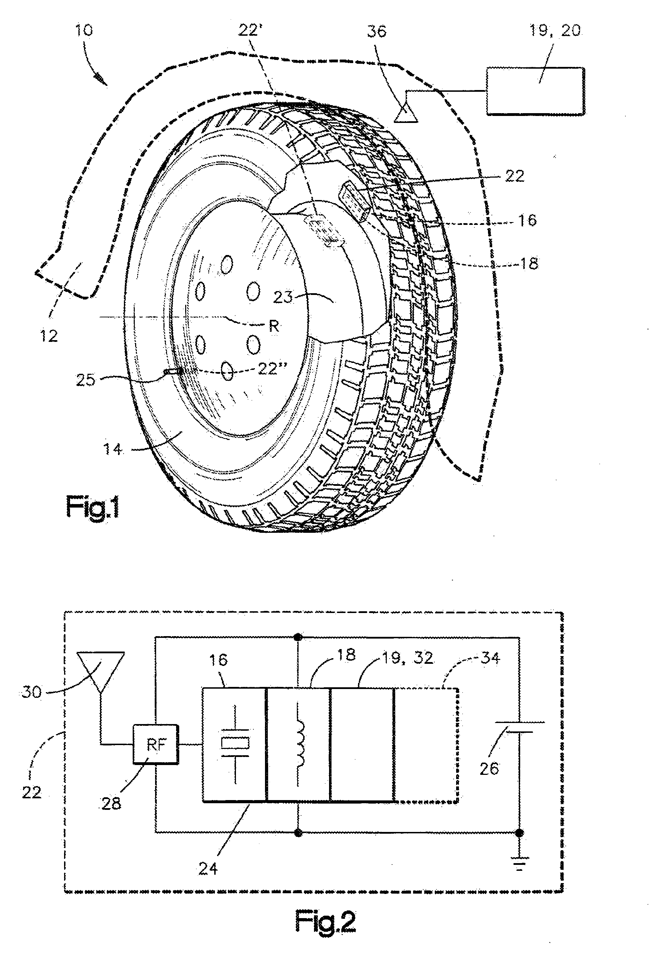

Referring to Fig. 1, an apparatus 10 is mounted on a vehicle 1 for determining a position of a tire 14 on the vehicle, in accordance with an example embodiment of the present invention. The apparatus 10 includes a piezoelectric sensor 16, which may be mounted on the tire 14. The apparatus 10 also includes a magnetic sensor 18, which may be mounted on the tire 14. As the piezoelectric sensor 16 rotates with the tire 14, the piezoelectric sensor generates a signal. Similarly, as the magnetic sensor 18 rotates with the tire, the magnetic sensor 18 generates a signal.

A controller 19 receives the signals from the piezoelectric sensor 16 and the magnetic sensor 18. The controller 19 compares the signals from the piezoelectric sensor 16 and the magnetic sensor 18 to each other to determine or to help determine a position of the tire 14 with respect to left and right sides of the vehicle 12. The controller 19 may include first and second portions, which may be positioned at spaced apart locations. The first portion of the controller 19 may include a tire-mounted controller 32 (Fig. 2). The second portion of the controller 19 may include an on-board controller 20. The on-board controller 20 may be mounted on the vehicle 12.

The piezoelectric sensor 16 may be a sensor constructed for use as an to sense acceleration experienced by the piezoelectric sensor as the piezoelectric sensor rotates relative to the earth's field, The piezoelectric sensor 16 may function through the use of piezoresistance or piezoelectricity and may include piezoelectric ceramic and/or single crystal materials. Suitable piezoelectric sensors are solid by Murata Manufacturing Co., Ltd, of Japan. The magnetic sensor 18 may be constructed to sense an electromagnetic effect produced at the magnetic sensor rotates relative to the earth's magnetic field. The magnetic sensor 18 may include a coil, and the electromagnetic effect sensed by the magnetic sensor may be a voltage associated with a current induced as the coil passes through the earth's magnetic field.

The piezoelectric sensor 16 and the magnetic sensor 18 may be mounted in a common housing the housing 22 may be mounted at any location on the tire 14, such as on a sidewall of the tire, as shown in Fig. 1, Alternatively, as shown at 22' in Fig. 1, the housing may be mounted on a wheel rim 23 of the vehicle 12. As a further alternative, as shown at 22" in Fig. 1, the housing may be mounted adjacent a valve stem 25 of the tire 14. If mounted adjacent to the valve stem 25, the housing 22 may be a housing for a tire pressure monitor or may be attached to or separate from such a housing for a tire pressure monitor. In an example embodiment illustrated in Fig. 2, the housing 22 encloses an application specific integrated circuit ("ASIC") 24. The ASIC 24 is electrically connected to a power supply 26, such as a which may be enclosed in the housing 22. The ASIC 24 is also electrically connected to a radio frequency ("RF") transmitter 28, which may be enclosed in the housing 22. The RF transmitter 28 is connected to an antenna 30. The ASIC 24 may include the piezoelectric sensor 16, the magnetic sensor 18, and a tire-mounted controller 32. The ASIC 24 may also optionally include a tire pressure sensor 34. As an alternative, to the embodiment shown in Fig. 2, either one or both of the piezoelectric sensor 16 and the magnetic sensor 18 may be a separate component electrically connected to the ASIC 24.

The tire-mounted controller 32 and/or the on-board controller 20 may be a microcomputer programmed to execute a control process, including one or more algorithms. The functions performed by the tire-mounted controller 32 and/or the controller 20 may, however, be carried out by other digital and/or analog circuitry, including separate electrical or electronic components, which may be assembled on one or more circuit boards using discrete circuitry or fabricated as an ASIC.

In accordance with an example embodiment of the present invention, the tire-mounted controller 32 monitors signal from the piezoelectric sensor 16 and the magnetic sensor 18 and, if provided, the optional tire pressure sensor 34. The tire-mounted controller 32 may perform one or more location determination algorithms to determine or to help determine a position, relative to the vehicle 12, of the tire 14 on which the piezoelectric sensor 16 and the magnetic sensor 18 are mounted. After performing the algorithms, the tire-mounted controller 32 provides information to the RF transmitter 28, which provides a data message signal to the antenna 30. The antenna 30 broadcasts the data message signals, which may be received by an antenna 36 connected with the on-board controller 20. The on-board controller 20 may perform one or more location determination algorithms using the information in the data message signal from the RF transmitter 28 to determine or to help determine a position, relative to the vehicle 12, of the tire 14 on which the piezoelectric sensor 16 and the magnetic sensor 18 are mounted.

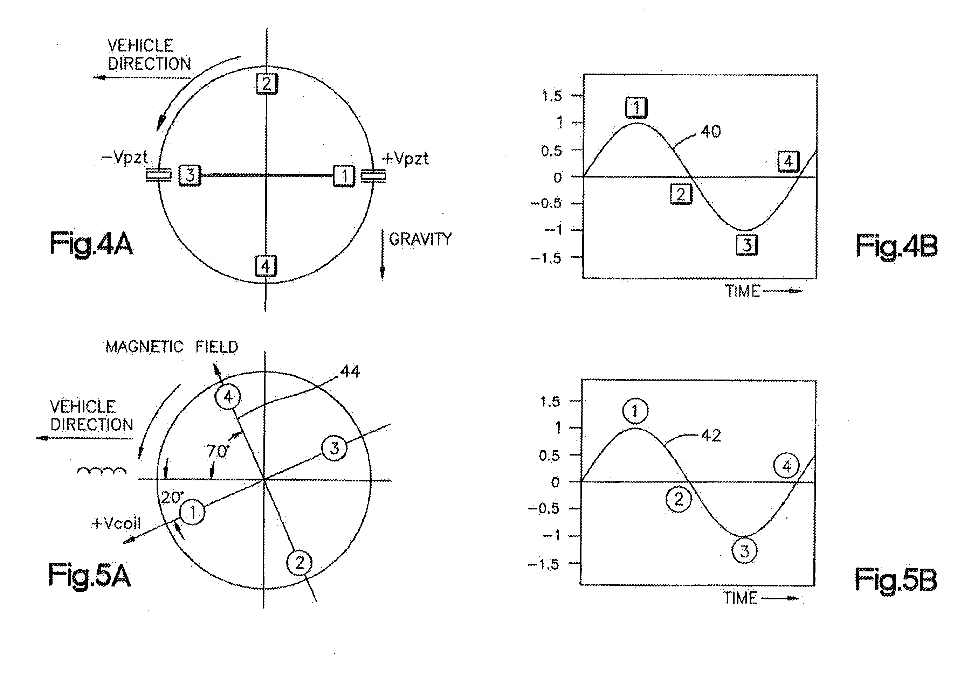

The apparatus 10 may employ measurement concepts such as those schematically illustrated in Figs. 4A through 5B. As shown in Figs. 4A and 4B, the piezoelectric sensor 16 is constructed and is mounted on the tire 14 to measure the acceleration G (i.e., 32 feet per second squared or 9.8 meters per second squared) applied to the piezoelectric sensor by the earth's gravity along a predetermined axis of sensitivity of the piezoelectric sensor. As the tire 14 rotates, for example, in the counterclockwise direction shown in Fig. 4A, the acceleration experienced and measured by the piezoelectric sensor 16 along its axis of sensitivity varies from a positive value of 1G to a negative value of 1G. The positive and negative signs for the acceleration are assigned arbitrarily to opposed directions along the axis of sensitivity. Thus, as a selected point on the circumference of the tire 14 passes a position designated as "1" in a square in Fig. 4A, the piezoelectric sensor 16 measures an acceleration of +1G along its axis of sensitivity, as shown in Fig. 4B, With rotation of the tire 14 in the counterclockwise direction as viewed in Fig. 4A, the selected point moves through the positions designated as "2", "3" and "4" in squares and the piezoelectric sensor 16 measures accelerations of 0G, -1G, and 0G, respectively, along its axis of sensitivity, as shown in Fig. 4B. The accelerations measured by the piezoelectric sensor 16 may be depicted as a sine wave 40, as shown in Fig. 4B, and the output signals from the piezoelectric sensor may similarly be depicted as the sine wave 40.

As shown in Figs. 5A and 5B, the magnetic sensor 18 is constructed and is mounted on the tire 14 to measure the voltage associated with the current induced in the magnetic sensor as the magnetic sensor moves through the earth's magnetic field. The magnetic sensor 18 may have a predetermined axis of sensitivity, which may result from the construction of the magnetic sensor, which may include a coil. As the tire 14 rotates, for example, in the counterclockwise direction shown in Fig. 5A, the voltage measured by the magnetic sensor 18 along its axis of sensitivity varies from a positive value of 1 to a negative value of 1. The values of +1 and -1 are by way of example only and are not actual voltages. The positive and negative signs for the voltage are assigned arbitrarily based opposed directions of current flow. Thus, as a selected point on the circumference of the tire 14 passes a position designated as "1" in a circle in Fig. 5A, the magnetic sensor 18 measures a voltage of +1 along its axis of sensitivity, as shown in Fig. 5B. With rotation of the tire 14 in the counterclockwise direction as viewed in Fig. 5A, the selected point moves through the positions designated as "2", "3" and "4" in circles and the magnetic sensor 18 measures voltages of 0, -1, and 0, respectively, along its axis of sensitivity, as shown in Fig. 5B. The voltages measured by the magnetic sensor 18 may be depicted as a sine wave 42, as shown in Fig. 5B, and the output signals from the magnetic sensor may similarly be depicted as the sine wave 42.

As can be seen by comparing Figs. 4A and 4B to Figs. 5A and 5B, the positions designated as "1", "2", "3" and "4" are different for the magnetic sensor 18 as compared to the piezoelectric sensor 16. The differences between the positions designated as "1", "2", "3" and "4" for the magnetic sensor 18 and for the piezoelectric sensor 16 result, in part, from a difference in the orientation of the axis of sensitivity of the magnetic sensor 18 as compared to the axis of sensitivity of the piezoelectric sensor 16. The differences between the positions designated as "1", "2", "3", and "4" for the magnetic sensor 18 and for the piezoelectric sensor 16 also result, in part, from an inclination 44 of the earth's magnetic field, which is measured from a horizontal orientation. Thus, for example, as shown in Fig. 5A, at a particular location on the earth's surface, the inclination 44 of the earth's magnetic field may be 70° from horizontal. The axis of sensitivity of the magnetic sensor 18 is oriented at 90° to the inclination 44 of the earth's magnetic field, which in the example embodiment would be 20° from horizontal.

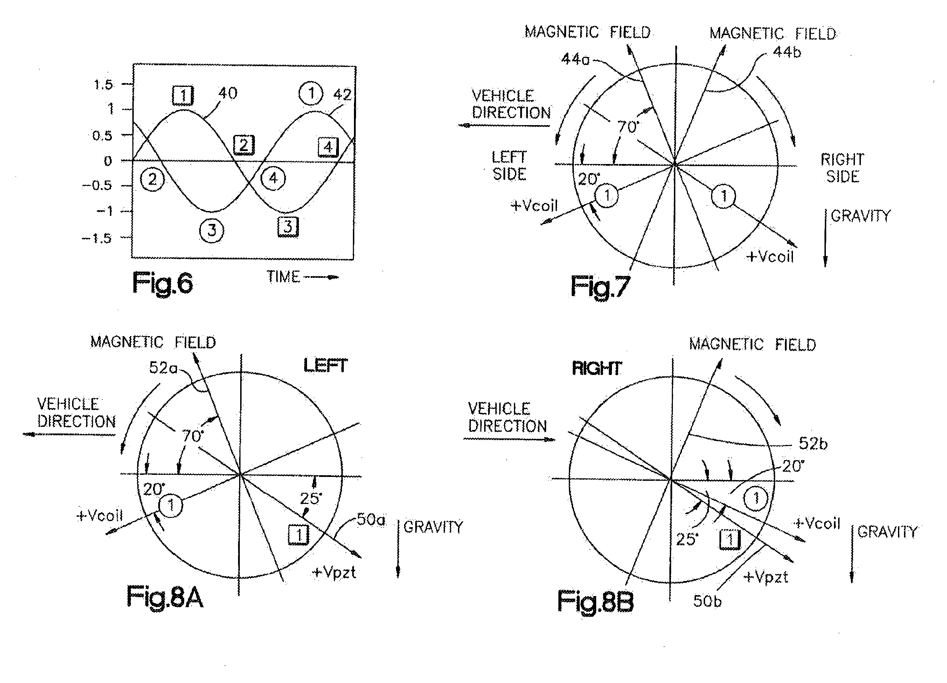

The previously described difference in the orientation of the axis of sensitivity of the magnetic sensor 18 as compared to the axis of sensitivity of the piezoelectric sensor 16 help to ensure that the output signals from the piezoelectric sensor 16 and the magnetic sensor 18 are out of phase. In one example embodiment of the apparatus 10, the piezoelectric sensor 16 and the magnetic sensor 18 may be mounted on the tire 14 so that their respective peak outputs (i.e., the positions designated as "1") would be 180° out of phase when the inclination of the earth's magnetic field is 90°. The effect of the example 70° inclination of the earth's magnetic field would be to cause the peak outputs of the piezoelectric sensor 16 and the magnetic sensor 18 to be an additional 20° out of phase or a total of 200° out of phase. This is illustrated in Fig. 6, in which the sine waves 40 and 42 produced by the outputs signals of the piezoelectric sensor 16 and the magnetic sensor 18, respectively, are plotted on the same axes.

As illustrated in Fig. 6, in the example, embodiment of Figs. 4A through Fig. 6, the sine wave 40 representing the output signal of the piezoelectric sensor 16 leads the sine wave 42 representing the output signal of the magnetic sensor 18. In other words, as a selected point on the circumference of the tire 14 rotates in a counterclockwise direction; the peak or highest value of the output signal of the piezoelectric sensor 16 may be experienced when the selected point is at or near the position designated as "1" in a square in Fig, 4A. When the selected point is at or near the position designated as "1" in a circle in Fig. 5A, which is approximately 200° degress of angular rotation beyond the position designated as "1" in Fig. 4A, the peak or highest value of the output signal of the magnetic sensor 18 may be experienced. Thus, output signals from the piezoelectric sensor 16 and the magnetic sensor 18, which are represented by the sine waves 40 and 42, respectively, have a lead-lag relationship in which the output signal of the piezoelectric sensor leads the output signal of the magnetic sensor.

The output from the magnetic sensor 18 is also affected by whether the tire 14 is mounted on the left side or the right side of the vehicle 12. By way of illustration, when the vehicle 12 is traveling in a straight line in a particular direction, the axis of rotation R of a tire 14 mounted on the left side of the vehicle will be coaxial with the axis of rotation R of a tire 14 mounted on the right side of the vehicle. When the tire 14 mounted on the left side of the vehicle 12 is viewed from a position on the axis of rotation R to the left of the vehicle., the tire may appear, for example, to be rotating in a counterclockwise direction. Similarly, when the tire 14 mounted on the right side of the vehicle 12 is viewed from a position on the axis of rotation R to the right of the vehicle, the tire may appear, for example, to be rotating in a clockwise direction. Magnetic sensors 18 mounted on the two tires 14 on opposite sides of the vehicle 12 will similarly experience an apparent difference in the inclination in the earth's magnetic field.

As illustrated in Fig. 7, in the example embodiment of the apparatus 10 described above, a magnetic sensor 18 mounted on a tire 14 on the left side of the vehicle 12 would experience an apparent inclination 44a of the earth's magnetic field of 70° from horizontal, which is indicated in the upper left quadrant of Fig. 7. A magnetic sensor 18 mounted on a tire 14 on the right side of the vehicle 12 in the same example embodiment would experience an apparent inclination 44b of the earth's magnetic field of 70° from horizontal, which is indicated in the upper right quadrant of Fig. 7. This difference in the apparent inclinations 44a and 44b of the earth's magnetic field and the apparent difference in the direction of rotation of the tires 14 causes the highest sensor output position designated "1" to be located in the lower left quadrant of Fig. 7 for a left side mounted tire 14 and in the lower right quadrant of Fig. 7 for a right side mounted tire. An angular difference between the two locations of the position designated "1" in Fig. 7 would be approximately equal to twice the actual Inclination of the earth's magnetic field (i.e., twice 70° or 140°).

As a result of the difference between the directions of rotation (i.e., counterclockwise versus clockwise) for a left side tire 14 and a right side tire 14, the output signal of the piezoelectric sensor 16 on the right side tire would lead the output signal of the magnetic, sensor 18 for the right side tire by only 20°, rather than 200°. As can be seen from the foregoing, the difference between the lead-lag relationships of the output signals of the right side and left side tires 14 is 180° (200° minus 20°). It has been discovered that this difference between the lead-lag relationships of the output signals of the right side and left side tires 14 would exist (plus or minus a tolerance) regardless of the inclination of the earth's magnetic field and regardless of the direction of vehicle motion.

In another example embodiment illustrated in Figs. 8A and 8B, the piezoelectric sensor 16 is constructed with an angular offset in its axis of sensitivity of 25°. The offset axis of sensitivity of the piezoelectric sensor 16 is designated 50a in Fit. 8A and 50b in Fig. 8B. The position designated as "1" in a square and accompanied by the legend "+V_{pzt} in Figs. 8A and 8B is the position at which, when passed by a selected point on the circumference of the tire 14, the piezoelectric sensor 16 provides its greatest positive output signal, As in the previous example embodiment, the inclination 52 of the earth's magnetic field is approximately 70°. The apparent inclination of the earth's magnetic field is marked as 52a in Fig. 8A, which schematically illustrates a tire 14 on the left side of the vehicle 12, and is marked as 52b in Fig. 8B, which schematically illustrates a tire 14 on the right side of the vehicle 12. The position designated as "1" in a circle and accompanied by the legend "+V_{coil} in Figs. 8A and 8B is the position at which, when passed by a selected point on the circumference of the tire 14, the magnetic sensor 18 provides its greatest positive output signal.

In the example embodiment of Figs. 8A and 8B, the output signal of the piezoelectric sensor 16 will lead the output signals of the magnetic sensor 18. In other worlds, as a selected point on the circumference of each of the tires 14 rotates in a clockwise or counterclockwise direction, the peak or highest value of the output signal of the piezoelectric sensor 16 may be experienced when the selected point is at or near the position designated as "1" is a square and accompanied by the legend "+V_{pzt} in Figs. 8A and 8B. When the selected point is at or near the position designated as "1" in a circle and accompanied by the legend "+V_{coil} in Figs. 8A and 8B, the peak or highest value of the output: signal of the magnetic sensor 18 may be experienced. On the left tire, as shown in Fig. 8A, the position designated as "1" in a circle and accompanied by the legend "+V_{coil} is approximately 225° of angular rotation beyond the position designated as "1" in a square and accompanied by the legend "+V_{pzt}. Thus, the output signal from the piezoelectric sensor 16 on the left tire 14 leads the output signal from the magnetic sensor 18 on the left tire by approximately 225°. On the right tire, as shown in Fig. 8B, the position designated as "1" in a circle and accompanied by the legend "+V_{coll} is approximately 355° of angular rotation beyond the position designated as "1" in a square and accompanied by the legend "+V_{pzt}. Thus, the output signal from the piezoelectric sensor 16 on the right tire 14 leads the output signal from the magnetic sensor 18 on the right tire by approximately 355°.

The difference in the lead-lag relationships described above between the output signals from the piezoelectric sensor 16 and the magnetic sensor 18 may be used to distinguish between a tire 14 mounted on the left side of a vehicle 12 and a tire 14 mounted on the right side of the vehicle. In particular, the difference between the lead-lag relationships of the output signals right side and left side tires 14 is 130° (335° minus 225°). As previously noted, it has been discovered that the difference between the lead-lag relationships of the output signals of the right side and left side tires 14 will exist (plus or minus a tolerance) regardless of the inclination of the earth's magnetic field and regardless of the direction of vehicle motion.

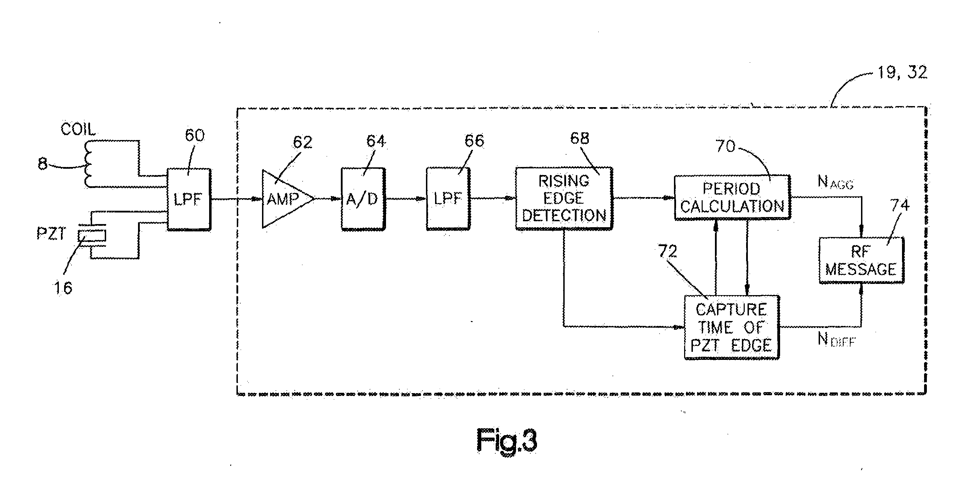

As shown in the functional block diagram of Fig. 3, the tire-mounted controller 32 may process output signals from the piezoelectric sensor 16 and the magnetic sensor 18 to determine or to help determine a position, relative to the vehicle 12, of the tire 14 on which the piezoelectric sensor and the magnetic sensor are mounted. The output signals from the piezoelectric sensor 16 and the magnetic sensor 18 can take any of several forms. Each of the output signals may have amplitude, frequency, pulse duration, and/or any other electrical characteristic that varies as a function of the sensed acceleration or magnetic effect. Thus, each of the output signals may have an electrical characteristic functionally related to the sensed acceleration or magnetic effect along the axis of sensitivity of the piezoelectric sensor 16 or the magnetic sensor 18, respectively,

In accordance with the example embodiment of Fig. 3, the piezoelectric sensor 16 and the magnetic sensor 18 provide output signals to a low-pass-filter ("LPF") function 60. The LPF function 60 filters the output signals to eliminate extraneous signal components, such as frequencies resulting from extraneous vehicle operating events and/or from road noise. The signal components removed through filtering are not useful in discriminating whether a tire 14 is mounted on the left or right side of the vehicle 12. Empirical testing or calculation may be used to determine the signal components useful for discrimination of whether a tire 14 is mounted on the left or right side of a vehicle 12. Signal components useful in determining whether a tire 14 is mounted on the left or right side of a vehicle 12 are output for further processing. The LPF function 60 may be included in the piezoelectric sensor 16 and/or the magnetic sensor 18 or may be included in the tire-mounted controller 32.

The tire-mounted controller 32 monitors the output signals from the piezoelectric sensor 16 and the magnetic sensor 18 and samples the signals at regular intervals or sample periods determined by, for example, a clock function (not shown) included in the tire-mounted controller. The filtered output signals sampled from the LPF function 60 are provided to an amplifier function 62 of the tire-mounted controller 32. The amplifier function 62 amplifies the filtered outputs signals provided by the LPF function 60. The amplified output signals from the amplifier function 62 are provided to an analog-to-digital ("A/D") converter function 64 of the tire-mounted controller 32. The A/D converter function 64 converts the amplified and filtered output signals into digital signal. The output of the A/D converter function 64 may be filtered with another filter function (not shown) having filter values determined for the purpose of eliminating small drifts and offsets associated with the A/D conversion. This other filter function may be digitally implemented within the tire-mounted controller 32.

The digitized output signals from the A/D converter function 64 are provided to a second LPF function 66. The second LPF function 66 filters the digitized output signals to eliminate extraneous signal components, such as frequencies resulting from vehicle operating events and/or from road noise. The signal components removed through filtering are not useful in discriminating whether a tire 14 is mounted on the left or right side of the vehicle 12. Empirical testing or calculation may be used to determine the signals components useful for discrimination, of whether a tire 14 is mounted on the left or right side of a vehicle 12, The filtered output signals from the second LPF function 66 are provided to a rising edge detection function 68 of the tire-mounted controller 32. The rising edge detection function 68 detects rising edges of the digitized output signals from the piezoelectric sensor 16 and the magnetic sensor 18. The rising edges may be used to determine the lead-lag relationship between the digitized output signal from the piezoelectric sensor 16 and the digitized output signal from the magnetic sensor 18.

The rising edge detection function 68 provides a begin-count output signal, such as a digital HIGH signal, to a period calculation function 70 when the rising edge detection function detects a rising edge of the digitized output signal from the magnetic sensor 18. When the period calculation function 70 receives the begin-count output signal from the rising edge detection function 68, the period calculation function begins to count the sample periods determined by, for example, the clock function (not shown) included in the tire-mounted controller 32.

The rising edge detection function 68 also provides a capture-time output signal, such as a digital HIGH signal, to a time capture function 72 of the tire-mounted controller 32 when the rising edge detection function detects a rising edge of the digitized output signal from the piezoelectric sensor 16. When the time capture function 72 receives the capture-time output signal from the rising edge detection function 68, the time capture function queries the period calculation function 70 and receives and stores a count (N_{DIFF}) of the number of sample periods counted by the period calculation function since it last received the begin-count output signal from the rising edge detection function. This count (N_{DIFF}) represents the number of sample periods counted at the time when the rising edge of the output signal from the piezoelectric sensor 16 was detected and also represents the difference between the times at which the rising edges of the output signals from the piezoelectric sensor and the magnetic sensor 18 were detected.

When the period calculation function 70 receives the next begin-count output signal from the rising edge detection function 68, the period calculation function ends its ongoing count of sample periods and stores an aggregate count of sample periods. The period calculation function 70 outputs a count-release signal to the time capture function 72 and also outputs the aggregate count (N_{AGG}) of sample periods to an RF message function 74 of the tire-mounted controller 32. The period calculation function 70 then restarts its count of sample periods. When the time capture function 72 receives the count-release output signal from the period calculation function 70, the time capture function outputs, to the RF message function, the count (N_{DIFF}) of the number of sample periods counted at the time when the rising edge of the output signal from the piezoelectric sensor 16 was detected.

The RF message function 74 then sends an RF message signal to the RF transmitter 28. The RF message signal includes the aggregate count (N_{AGG}) of sample periods counted by the period calculation function 70 and the corresponding count (N_{DIFF}) of the number of sample periods counted at the time when the rising edge of the output signal from the piezoelectric sensor 16 was detected. The RF transmitter 28 sends, via the antenna 30, an RF message that includes the forgoing information and, optionally, other information such as tire pressure. The RF message is received, via the antenna 36, by the on-board controller 20.

The on-board controller 20 uses the information in the RF signal to determine the lead-lag relationship between the output signals from the piezoelectric sensor 16 and the magnetic sensor 18. For example, the on-board controller 20 may execute an algorithm in which the count (N_{DIFF}) of the number of sample periods counted at the time when the rising edge of the output signal from the piezoelectric sensor 16 was detected is divided by the aggregated count (N_{AGG}) and then multiplied by 360°. The result of this calculation would be the number of degrees of angular rotation between the highest levels of the output signals of the piezoelectric sensor 16 and the magnetic sensor 18, which is an angular lead-lag relationship between the output signals.

The on-board controller 20 may then execute an algorithm in which the calculated or determined angular lead-lag relationship of the output signals of the piezoelectric sensor 16 and the magnetic sensor 18 mounted on each tire 14 are compared with the calculated or determined lead-lag relationship of the output signals of the piezoelectric sensors and magnetic sensors mounted on other tires 14. This comparison may include, for example, subtracting the determined angular lead-lag relationship of the output signals for a first tire from the determined angular lead-lag relationship of the output signals for a second tire. Based on the sign (positive or negative) of the calculated difference between the determined angular lead-lag relationships for the first and second tires, the on-board controller 20 may determine, via a look-up table, for example, whether each of the first and second tires is mounted on the right or left side of the vehicle 12. The forgoing calculation of determination may also take into account the expected or predetermined difference between the lead-lag relationships for tires 14 mounted on the left and right sides of the vehicle 12 (such as 180° in the example of Fig. 7 and 130° in the example embodiment of Figs. 8A and 8B). Thus, for example, if the expected or predetermined difference between the lead-lag relationships for tires 14 mounted on the left and right sides of the vehicle 12 is 130° and the calculated difference between the determined angular lead-lag relationships of the output signals for a first tire and a second tire is only 5°, the on-board computer 20 may determine that the first and second tires are both mounted on the same side of the vehicle.

Although the foregoing example embodiment uses both the on-board controller 20 and the tire-mounted controller 32 to determine the lead-lag relationship between the output signals from the piezoelectric sensor 16 and the magnetic sensor 18 and whether the tire 14 is on the right or left side of the vehicle 12, either the on-board controller alone or the tire-mounted controller alone could be used to make the determinations. In other words, the controller 19 may include only the on-board controller 20 or only the tire-mounted controller 32. If the on-board controller 20 was used alone to make the determinations, the on-board controller would periodically sample the output signals from the piezoelectric sensor 16 and the magnetic sensor 18 and perform all of the signal processing and counting functions performed by the tire-mounted controller 32 in the example embodiment described above. Similarly, if the tire-mounted controller 32 was used alone to make the determinations, the tire-mounted controller would perform the lead lag determination and the left-right determination performed by the on-board controller 20 in the example embodiment described above.

Similarly, although the tire-mounted controller 32 may use the detected rising edges of the output signals from the magnetic sensor 18 to determine the aggregate count (N_{AGG}), as in the example embodiment of Fig. 3, the tire-mounted controller may alternatively use the detected rising edges of the output signals from the piezoelectric sensor 16 to determine the aggregate count (N_{AGG}). In such an alternate embodiment, the tire-mounted controller 32 may use the detected rising edges of the output signals from the magnetic sensor 18 to determine the count (N_{DIFF}) representing the difference between the times at which the rising edges of the output signals from the piezoelectric sensor 16 and the magnetic sensor are detected.

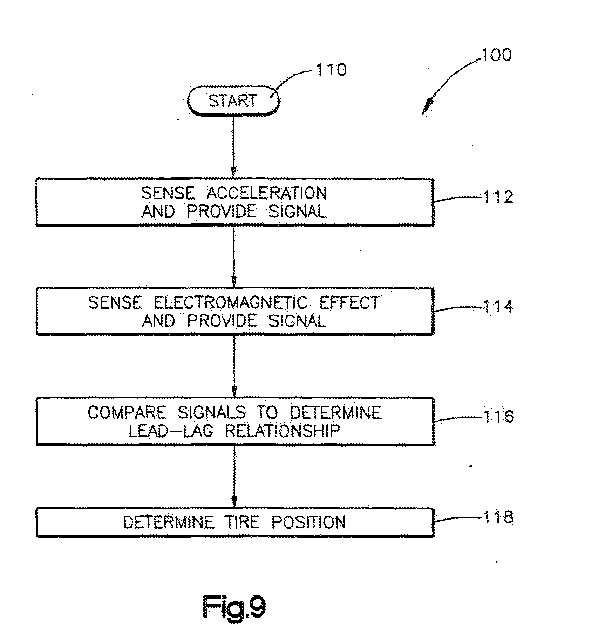

As shown in Fig. 9, an example embodiment of a process 100 for determining a position of a tire on a vehicle begins at step 110. The process 100 then proceeds to step 112 in which an acceleration along a rotating axis is sensed and a signal indicative of the sensed acceleration is provided. The sensed acceleration varies in response to rotation of the tire through a gravitational field of the earth. The process 100 next proceeds to step 114 in which an electromagnetic effect is sensed and a signal indicative of the sensed electromagnetic effect is provided. The sensed electromagnetic effect varies in response to rotation of the tire through a magnetic field of the earth. The process 100 further proceeds to step 116 in which the signals are compared to determine a lead-lag relationship between the signals. The process 100 thereafter proceeds to step 118 in which a determination is made as to the position of the tire, relative to the left and right sides of a vehicle, based on the determined lead-lag relationship.

## Claims

1. Apparatus (10) for determining a position of a tire (14) on a vehicle (12) comprising:
a piezoelectric sensor (16) for generating a first signal (40) in response to rotation of the tire (14) through a gravitational field of the earth;
a magnetic sensor (18) for generating a second signal (42) in response to rotation of the tire (14) through a magnetic field of the earth; and
a controller (19, 20, 32) for comparing the first and second signals (40, 42) to each other to determine a position of the tire (14) with respect to left and right sides of the vehicle (12).

2. The apparatus of claim 1 wherein the controller (19, 20, 32) is configured to determine a lead-lag relationship between the first and second signals (40, 42) and to determine the position of the tire (14) based on the determined lead-lag relationship.

3. The apparatus of claim 1 wherein the piezoelectric sensor (16) has a first axis of sensitivity and the magnetic sensor (18) has a second axis of sensitivity, the piezoelectric sensor (16) and the magnetic sensor (18) being oriented relative to one another such that the first axis of sensitivity is oriented at an angle relative to the second axis of sensitivity, said angle being greater than 0° and less than 360°.

4. The apparatus of claim 1 wherein the piezoelectric sensor (16) and the magnetic sensor (18) are mountable on the tire (14).

5. The apparatus of claim 4 wherein the piezoelectric sensor (16) is positioned adjacent to the magnetic sensor (18).

6. The apparatus of claim 4 wherein the piezoelectric sensor (16) and the magnetic sensor (18) are associated with a tire pressure sensor (34) mountable on the tire (14).

7. The apparatus of claim 6 wherein the piezoelectric sensor (16) and the magnetic sensor (18) are included in a common housing (22) with the tire pressure sensor (34).

8. The apparatus of claim 1 wherein the controller (19) includes a first controller portion (32) for mounting on the tire (14).

9. The apparatus of claim 8 wherein the controller (19) includes a second controller portion (20) for mounting on a body of the vehicle (12) spaced apart from the tire (14).

10. The apparatus of claim 1 wherein the piezoelectric sensor (16) and the magnetic sensor (18)are mountable on the tire (14).

11. A method for determining a position of a tire (14) on a vehicle (12) comprising the steps of:
sensing (112) an acceleration along a rotating axis and providing a first signal (40) indicative thereof, the sensed acceleration varying in response to rotation of the tire (14) through a gravitational field of the earth;
sensing (114) an electromagnetic effect and providing a second signal (42) indicative thereof, the sensed electromagnetic effect varying in response to rotation of the tire (14) through a magnetic field of the earth; and
comparing (116, 118) the first and second signals (40, 42) to each other to determine a position of the tire (14) with respect to left and right sides of the vehicle (12).

12. The method of claim 11 wherein the step of comparing (116, 118) the first and second signals (40, 42) includes the steps of determining (116) a lead-lag relationship between the first and second signals (40, 42) and determining (118) the position of the tire (14) based on the determined lead-lag relationship.

13. The method of claim 11 wherein the step of sensing (114) an electromagnetic effect includes the step of sensing a voltage associated with a current induced in response to rotation of the tire (14) through the magnetic field of the earth.

14. The method of claim 11 wherein the step of sensing (112) an acceleration along a rotating axis includes the step of sensing an acceleration along an axis that rotates with the tire (14).

15. The method of claim 11 wherein the tire (14) is a first tire and the step of comparing (116, 118) the first and second signals (40, 42) includes the step of determining (116) a lead-lag relationship between the first and second signals (40, 42), the method further including the steps of:
sensing an acceleration along a rotating axis and providing a third signal indicative thereof, the sensed acceleration varying in response to rotation of a second tire through a gravitational field of the earth;
sensing an electromagnetic effect and providing a fourth signal indicative thereof, the sensed electromagnetic effect varying in response to rotation of the second tire through a magnetic field of the earth;
comparing the third and fourth signals to each other to determine a position of the tire with respect to left and right sides of the vehicle, the step of comparing the third and
fourth signals including the step of determining a lead-lag relationship between the third and fourth signals; and
determining the positions of the first and second tires by comparing the determined lead-lag relationship between the first and second signals to the determined lead-lag relationship between the third and fourth signals.

## Patentansprüche

1. Eine Vorrichtung (10) zum Bestimmen einer Position eines Reifens (14) an einem Fahrzeug (12), wobei die Vorrichtung Folgendes aufweist:
einen piezoelektrischen Sensor (16) zum Erzeugen eines ersten Signals (40), als Antwort auf eine Rotation des Reifens (14), durch ein Gravitationsfeld der Erde;
einen magnetischen Sensor (18) zum Erzeugen eines zweiten Signals (42), als Antwort auf eine Rotation des Reifens (14), durch ein Magnetfeld der Erde; und
einen Controller (19, 20, 32) zum Vergleichen des ersten und des zweiten Signals (40, 42) miteinander, um eine Position des Reifens (14) zu bestimmen, bezüglich der linken und der rechten Seite des Fahrzeugs (12).

2. Die Vorrichtung nach Anspruch 1, wobei der Controller (19, 20, 32) konfiguriert ist zum Bestimmen einer Vorhalt-Verzögerungsbeziehung zwischen dem ersten und dem zweiten Signal (40, 42) und zum Bestimmen der Position des Reifens (14) basierend auf der bestimmten Vorhalt-Verzögerungsbeziehung.

3. Die Vorrichtung nach Anspruch 1, wobei der piezoelektrische Sensor (16) eine erste Empfindlichkeitsachse aufweist und der magnetische Sensor (18) eine zweite Empfindlichkeitsachse aufweist, wobei der piezoelektrische Sensor (16) und der magnetische Sensor (18) relativ zueinander ausgerichtet sind, und zwar so, dass die erste Empfindlichkeitsachse unter einem Winkel relativ zu der zweiten Empfindlichkeitsachse ausgerichtet ist, wobei der Winkel größer als 0° und kleiner als 360° ist.

4. Die Vorrichtung nach Anspruch 1, wobei der piezoelektrische Sensor (16) und der magnetische Sensor (18) auf dem Reifen (14) montierbar sind.

5. Die Vorrichtung nach Anspruch 4, wobei der piezoelektrische Sensor (16) benachbart zu dem magnetischen Sensor (18) angeordnet ist.

6. Die Vorrichtung nach Anspruch 4, wobei der piezoelektrische Sensor (16) und der magnetische Sensor (18) mit einem Reifendrucksensor (34) assoziiert sind, der auf dem Reifen (14) montierbar ist.

7. Die Vorrichtung nach Anspruch 6, wobei der piezoelektrische Sensor (16) und der magnetische Sensor (18) in einem gemeinsamen Gehäuse (22) mit dem Reifendrucksensor (34) eingebaut sind.

8. Die Vorrichtung nach Anspruch 1, wobei der Controller (19) einen ersten Controllerteil (32) zum Befestigen auf dem Reifen (14) aufweist.

9. Die Vorrichtung nach Anspruch 8, wobei der Controller (19) einen zweiten Controllerteil (20) zum Befestigen auf einem Körper des Fahrzeugs (12) aufweist, beabstandet zu dem Reifen (14).

10. Die Vorrichtung nach Anspruch 1, wobei der piezoelektrische Sensor (16) und der magnetische Sensor (18) auf dem Reifen (14) montierbar sind.

11. Ein Verfahren zum Bestimmen einer Position eines Reifens (14) an einem Fahrzeug (12), wobei das Verfahren die folgenden Schritte aufweist:
Abfühlen (112) einer Beschleunigung entlang einer Rotationsachse und Bereitstellen eines ersten Signals (40) als Anzeige dafür, wobei die abgefühlte Beschleunigung variiert ansprechend auf die Rotation des Reifens (14) durch ein Gravitationsfeld der Erde;
Abfühlen (114) eines elektromagnetischen Effekts und Bereitstellen eines zweiten Signals (42) als Anzeige dafür, wobei der abgefühlte elektromagnetische Effekt variiert ansprechend auf die Rotation des Reifens (14) durch ein magnetisches Feld der Erde; und
Vergleichen (116, 118) des ersten und des zweiten Signals (40, 42) miteinander zum Bestimmen einer Position des Reifens (14) bezüglich der linken und der rechten Seite des Fahrzeugs (12).

12. Das Verfahren nach Anspruch 11, wobei der Schritt des Vergleichens (116, 118) des ersten und des zweiten Signals (40, 42) die Schritte des Bestimmens (116) einer Vorhalt-Verzögerungsbeziehung zwischen dem ersten und dem zweiten Signal (40, 42) und des Bestimmens (118) der Position des Reifens (14) basierend auf der bestimmten Vorhalt-Verzögerungsbeziehung, beinhaltet.

13. Das Verfahren nach Anspruch 11, wobei der Schritt des Abfühlens (114) eines elektromagnetischen Effekts den Schritt des Abfühlens einer Spannung beinhaltet, die mit einem Strom, der ansprechend auf eine Rotation des Reifens (14) durch das magnetische Feld der Erde induziert wird, assoziiert ist.

14. Das Verfahren nach Anspruch 11, wobei der Schritt des Abfühlens (112) einer Beschleunigung entlang einer Rotationsachse den Schritt des Abfühlens einer Beschleunigung entlang einer Rotationsachse aufweist, die mit dem Reifen (14) rotiert.

15. Das Verfahren nach Anspruch 11, wobei der Reifen (14) ein erster Reifen ist und der Schritt des Vergleichens (116, 118) des ersten und des zweiten Signals (40, 42) den Schritt des Bestimmens (116) einer Vorhalt-Verzögerungsbeziehung zwischen dem ersten und dem zweiten Signal (40, 42) aufweist, wobei das Verfahren ferner die folgenden Schritte aufweist:
Abfühlen einer Beschleunigung entlang einer Rotationsachse und Bereitstellen eines dritten Signals als Anzeige dafür, wobei die abgefühlte Beschleunigung variiert ansprechend auf die Rotation eines zweiten Reifens durch ein Gravitationsfeld der Erde;
Abfühlen eines elektromagnetischen Effekts und Bereitstellen eines vierten Signals als Anzeige dafür, wobei der abgefühlte elektromagnetische Effekt variiert ansprechend auf die Rotation des zweiten Reifens durch ein magnetisches Feld der Erde;
Vergleichen des dritten und des vierten Signals miteinander zum Bestimmen einer Position des Reifens bezüglich der linken und der rechten Seite des Fahrzeugs, wobei der Schritt des Vergleichens des dritten und des vierten Signals den Schritt des Bestimmens einer Vorhalt-Verzögerungsbeziehung zwischen dem dritten und dem vierten Signal aufweist; und
Bestimmen der Positionen des ersten und des zweiten Reifens durch Vergleichen der bestimmten Vorhalt-Verzögerungsbeziehung zwischen dem ersten und dem zweiten Signal mit der bestimmten Vorhalt-Verzögerungsbeziehung zwischen dem dritten und dem vierten Signal.

## Revendications

1. Appareil (10) pour déterminer la position d'un pneumatique (14) sur un véhicule (12), comprenant :
un capteur piézoélectrique (16) pour générer un premier signal (40) en réponse à la rotation du pneumatique (14) à travers un champ de gravitation de la terre ;
un capteur magnétique (18) pour générer un deuxième signal (42) en réponse à la rotation du pneumatique (14) à travers un champ magnétique de la terre ; et
un dispositif de commande (19, 20, 32) pour comparer les premier et deuxième signaux (40, 42) l'un à l'autre de façon à déterminer la position du pneumatique (14) par rapport aux côtés gauche et droit du véhicule (12).

2. Appareil selon la revendication 1, dans lequel le dispositif de commande (19, 20, 32) est configuré de façon à déterminer une relation d'avance-retard entre les premier et deuxième signaux (40, 42) et de façon à déterminer la position du pneumatique (14) en fonction de la relation d'avance-retard déterminée.

3. Appareil selon la revendication 1, dans lequel le capteur piézoélectrique (16) comporte un premier axe de sensibilité et le capteur magnétique (18) comporte un deuxième axe de sensibilité, le capteur piézoélectrique (16) et le capteur magnétique (18) étant orientés l'un par rapport à l'autre de telle sorte que le premier axe de sensibilité soit orienté selon un certain angle par rapport au deuxième axe de sensibilité, ledit angle étant supérieur à 0° et inférieur à 360°.

4. Appareil selon la revendication 1, dans lequel le capteur piézoélectrique (16) et le capteur magnétique (18) peuvent être montés sur le pneumatique (14).

5. Appareil selon la revendication 4, dans lequel le capteur piézoélectrique (16) est positionné au voisinage du capteur magnétique (18).

6. Appareil selon la revendication 4, dans lequel le capteur piézoélectrique (16) et le capteur magnétique (18) sont associés à un capteur de pression de pneumatique (34) pouvant être monté sur le pneumatique (14).

7. Appareil selon la revendication 6, dans lequel le capteur piézoélectrique (16) et le capteur magnétique (18) sont inclus dans un boîtier commun (22) au capteur de pression de pneumatique (34).

8. Appareil selon la revendication 1, dans lequel le dispositif de commande (19) comprend une première partie de dispositif de commande (32) pour le montage sur le pneumatique (14).

9. Appareil selon la revendication 8, dans lequel le dispositif de commande (19) comprend une deuxième partie de dispositif de commande (20) pour le montage sur une caisse du véhicule (12) de façon espacée vis-à-vis du pneumatique (14) .

10. Appareil selon la revendication 1, dans lequel le capteur piézoélectrique (16) et le capteur magnétique (18) peuvent être montés sur le pneumatique (14).

11. Procédé pour déterminer la position d'un pneumatique (14) sur un véhicule (12), comprenant les étapes consistant à :
détecter (112) une accélération le long d'un axe de rotation et délivrer un premier signal (40) indicatif de celle-ci, l'accélération détectée variant en réponse à la rotation du pneumatique (14) à travers un champ de gravitation de la terre ;
détecter (114) un effet électromagnétique et délivrer un deuxième signal (42) indicatif de celui-ci, l'effet électromagnétique détecté variant en réponse à la rotation du pneumatique (14) à travers un champ magnétique de la terre ; et
comparer (116, 118) les premier et deuxième signaux (40, 42) l'un à l'autre de façon à déterminer une position du pneumatique (14) par rapport aux côtés gauche et droit du véhicule (12).

12. Procédé selon la revendication 11, dans lequel l'étape de comparaison (116, 118) des premier et deuxième signaux (40, 42) comprend les étapes de détermination (116) d'une relation d'avance-retard entre les premier et deuxième signaux (40, 42) et de détermination (118) de la position du pneumatique (14) en fonction de la relation d'avance-retard déterminée.

13. Procédé selon la revendication 11, dans lequel l'étape de détection (114) d'un effet électromagnétique comprend l'étape de détection d'une tension associée à un courant induit en réponse à la rotation du pneumatique (14) à travers le champ magnétique de la terre.

14. Procédé selon la revendication 11, dans lequel l'étape de détection (112) d'une accélération le long d'un axe de rotation comprend l'étape de détection d'une accélération le long d'un axe qui tourne avec le pneumatique (14).

15. Procédé selon la revendication 11, dans lequel le pneumatique (14) est un premier pneumatique et l'étape de comparaison (116, 118) des premier et deuxième signaux (40, 42) comprend l'étape de détermination (116) d'une relation d'avance-retard entre les premier et deuxième signaux (40, 42), le procédé comprenant de plus les étapes consistant à :
détecter une accélération le long d'un axe de rotation et délivrer un troisième signal indicatif de celle-ci, l'accélération détectée variant en réponse à une rotation d'un deuxième pneumatique à travers un champ de gravitation de la terre ;
détecter un effet électromagnétique et délivrer un quatrième signal indicatif de celui-ci, l'effet électromagnétique détecté variant en réponse à la rotation du deuxième pneumatique à travers un champ magnétique de la terre ;
comparer les troisième et quatrième signaux l'un à l'autre de façon à déterminer une position du pneumatique par rapport aux côtés gauche et droit du véhicule, l'étape de comparaison des troisième et quatrième signaux comprenant l'étape de détermination d'une relation d'avance-retard entre les troisième et quatrième signaux ; et
déterminer les positions des premier et deuxième pneumatiques par comparaison de la relation d'avance-retard déterminée entre les premier et deuxième signaux à la relation d'avance-retard déterminée entre les troisième et quatrième signaux.
